Europäisches Patentamt

European Patent Office

Office européen des brevets

(11) Publication number: **0 309 228**
**A2**

## (12) EUROPEAN PATENT APPLICATION

(21) Application number: **88308764.5**

(22) Date of filing: **21.09.88**

(51) Int. Cl.⁴: **G 06 F 15/20**

(30) Priority: **22.09.87 JP 238455/87**

(43) Date of publication of application:
**29.03.89 Bulletin 89/13**

(84) Designated Contracting States: **DE FR GB IT**

(71) Applicant: **BROTHER KOGYO KABUSHIKI KAISHA
35, 9-chome, Horita-dori Mizuho-ku
Nagoya-shi, Aichi-ken (JP)**

(72) Inventor: **Makihara, Kayoko
Brother Kogyo 35, Horita-dori 9-chome Mizuho-ku
Nagoya-shi Aichi-ken (JP)**

(74) Representative: **Senior, Alan Murray et al
J.A. KEMP & CO 14 South Square Gray's Inn
London WC1R 5EU (GB)**

(54) **Word processor.**

㊿ In a word processor, provided are means for setting a print format and means for reforming one aggregate organized by inputted data by adapting the print format set for other aggregate. A simple operation enables the same print format to be set for different aggregate, and it becomes unnecessary to set the format separately for each aggregate.

**Description**

## Word Processor

This invention relates to a word processor equipped with a format setting means to set a print format during text editing.

In known word processors, when setting the print format during text editing, it has been necessary to enter the print format setting mode after moving the cursor to a certain character data aggregate for which the format is to be set. Then, the processing escapes the format setting mode, and the character data in the aggregate is reformed in accordance with the print format having been set during the print format setting mode.

In the known word processors described above, there exists a problem that, if the same print format is to be set for two or more different aggregates, the operator has to set the format separately for each aggregate, making the setting operation cumbersome.

According to this invention, there is provided a word processor comprising a keyboard for inputting character codes and function codes, a display means for displaying character data corresponding to the inputted character codes, and control means for organizing aggregates, each of which comprises a group of character data, said word processor including:

format setting means for setting a print format for at least one aggregate; and

format control means for reforming another of said aggregates by employing the print format which has been set for one of said aggregates.

Thus, this invention provides an improved word processor capable of setting the same print format for different aggregates with simple operation.

The invention will be more clearly understood from the following description which is given by way of example only with reference to the accompanying drawings in which:

Fig. 1 is a perspective external view of a word processor embodying the invention;

Fig. 2 is a plan view of a keyboard section of the word processor shown in Fig. 1;

Fig. 3 is a block diagram illustrating the configuration of the word processor shown in Fig. 1;

Fig. 4 is an explanatory view showing a display example of a text data in the word processor shown in Fig. 1; and

Figs. 5A through 5C are flow charts of programs executed in a format setting mode in the word processor shown in Fig. 1.

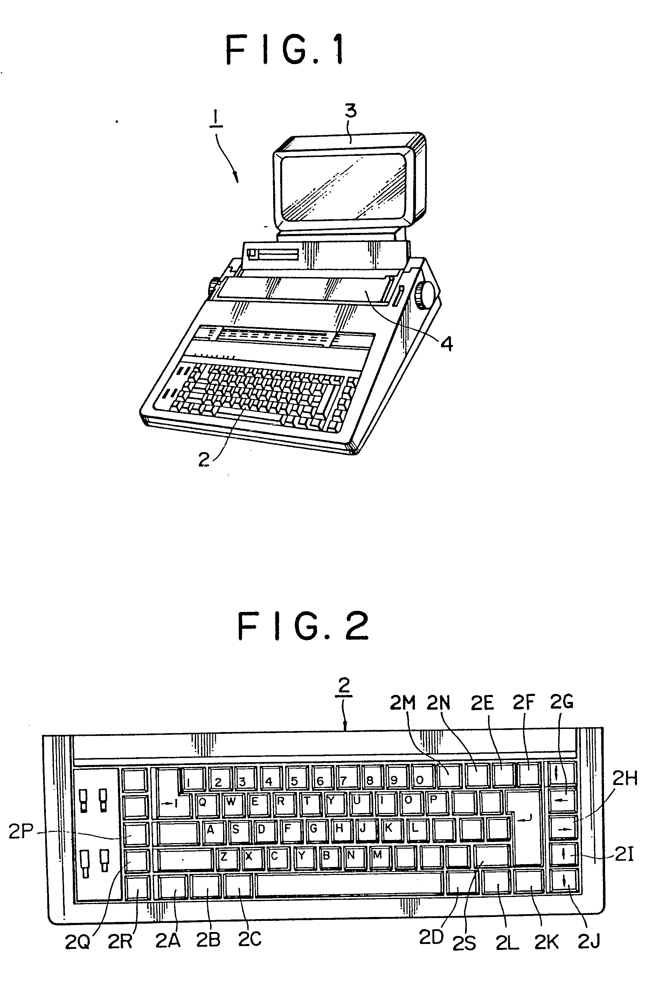

Fig. 1 shows a word processor 1 embodying the invention, which is equipped with a keyboard 2 to be operated for inputting character and control codes, a display unit 3 to display characters and/or symbols corresponding to the inputted character codes, and a printer unit 4 to print out characters and/or symbols.

The keyboard 2 is provided with function keys and character keys as illustrated in Fig. 2.

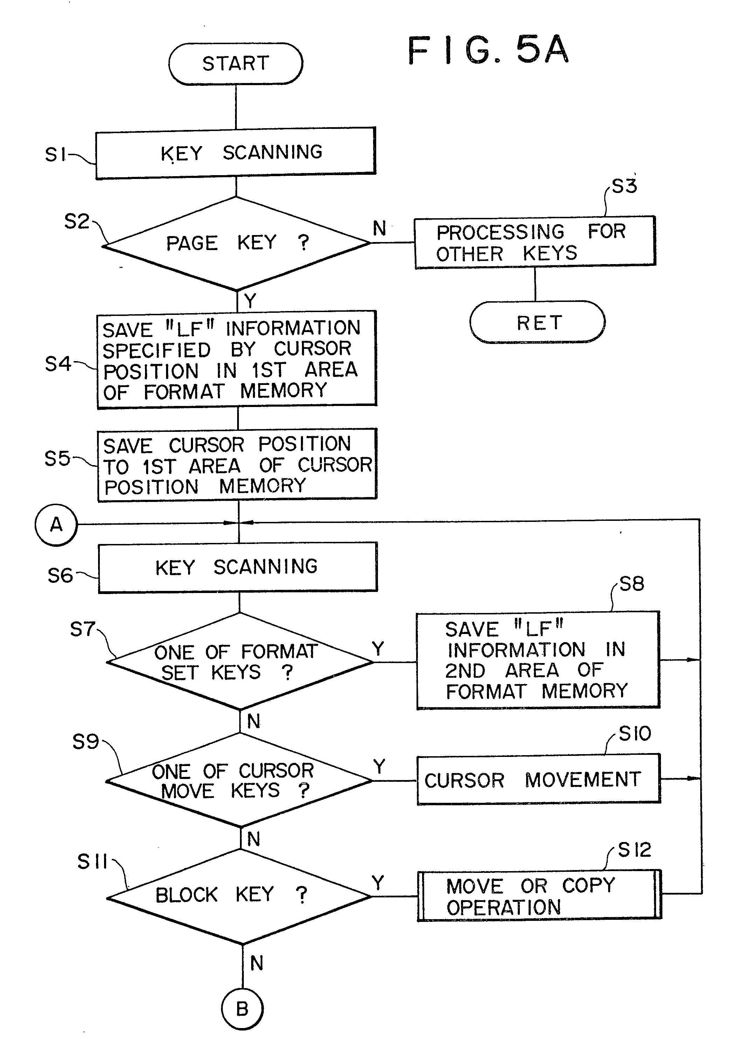

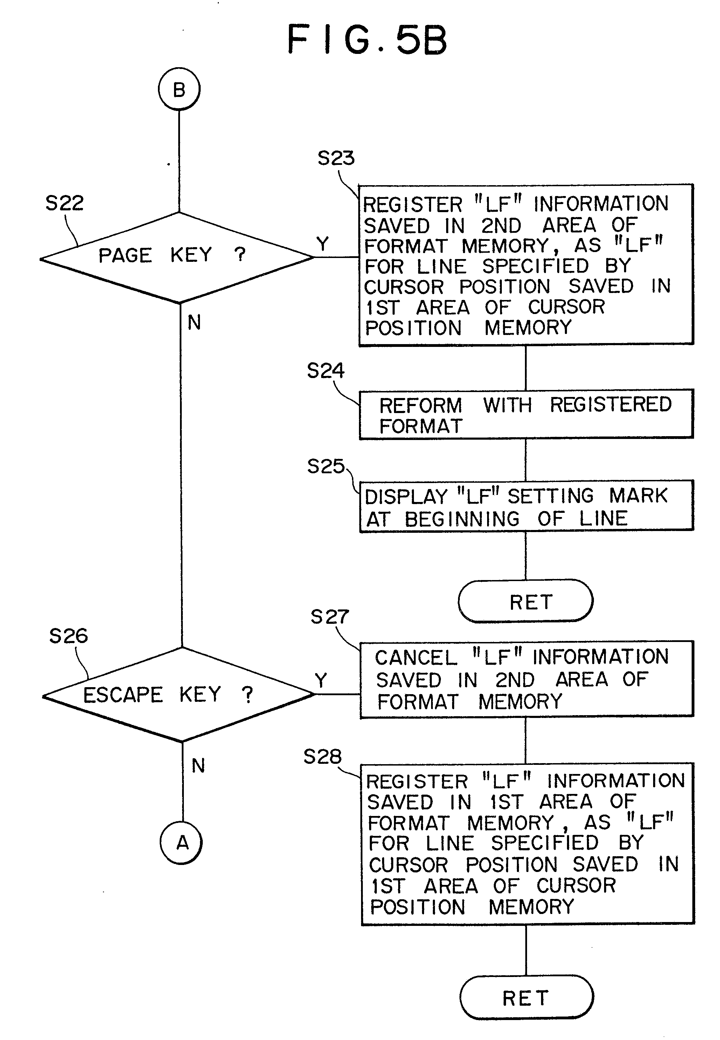

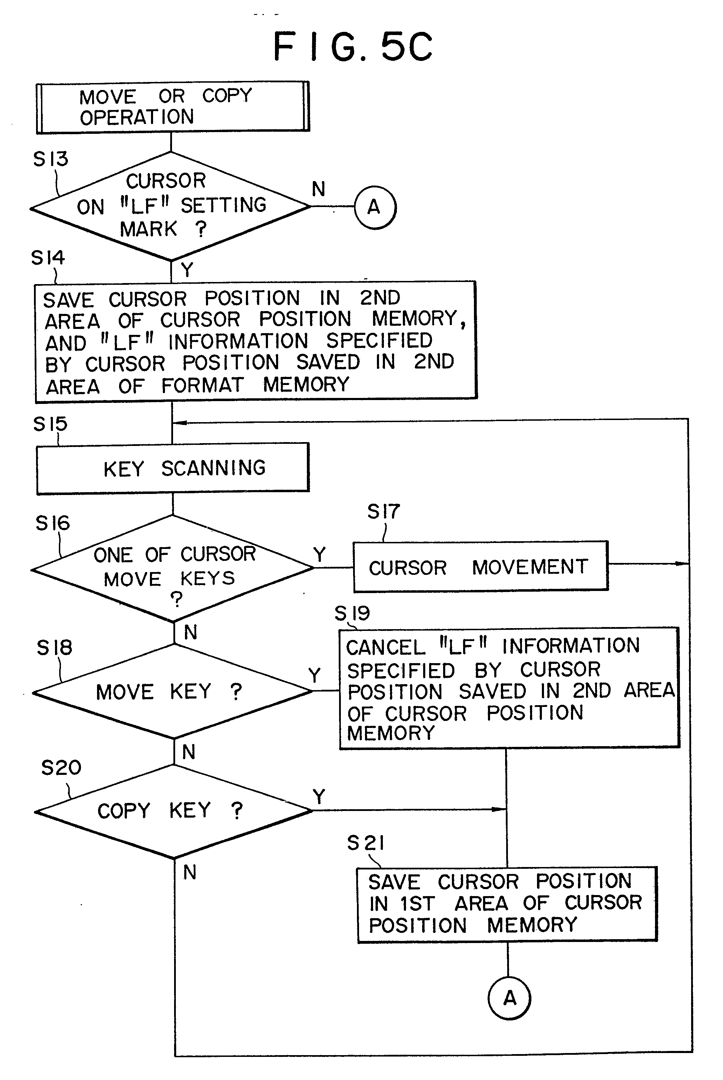

Among the keys, a page key 2A is operated to enter and escape a format mode for setting a desired print format. A left margin set key 2B and a right margin set key 2C are to set the left and right margins during the format mode. A tab set key 2D, a decimal tab set key 2E, and a hot zone set key 2F are to set tab, decimal tab and hot zone respectively. Cursor move keys 2G, 2H, 2I and 2J are to move a cursor 3A (see Fig. 5) displayed on the display unit 3, in the arrow-indicated directions marked on the individual keys. A tab clear key 2K and an all tab clear key 2L are to clear one or all of the tabs having been set by the above keys. A line space key 2M and a pitch key 2N are to change a line spacing or a character pitch. A block key 2P is not only to specify the block area of character data displayed on the display unit 3 but also to select a line-format setting mark which is later described. A move key 2Q and a copy key 2R are to adapt the format information for one aggregate to other aggregate. An escape key 2S is to make the set format invalid.

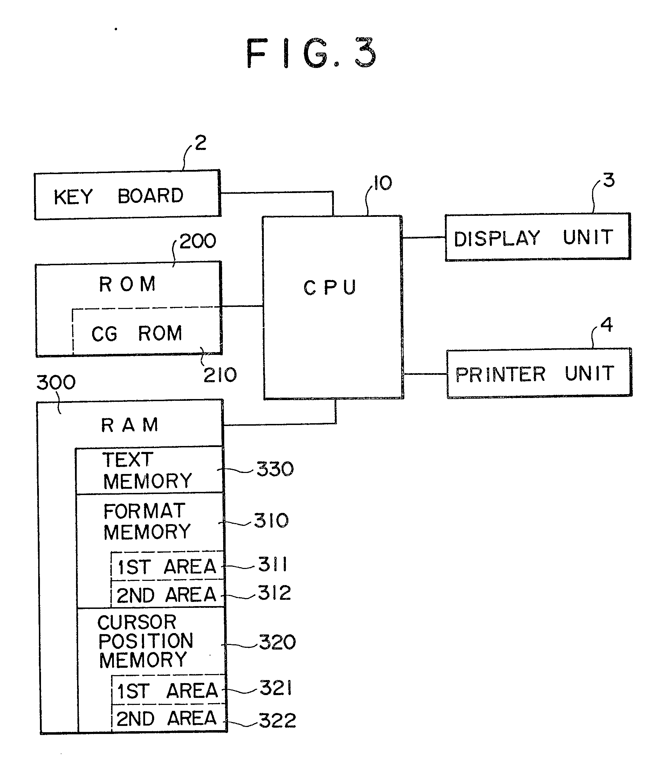

Fig. 3 is a block diagram illustrating the configuration of the word processor 1. The CPU (central processing unit) 10 controls all operations of the word processor 1. The keyboard 2, the display unit 3, the printer unit 4, the ROM (read only memory) 200, the RAM (random access memory) 300 are respectively connected to the CPU 10.

The ROM 200 has stored therein various programs to be executed by the CPU 10. The ROM 200 includes therein a CGROM (character generator ROM)210 which has stored therein patterns of characters and symbols to be displayed on the display unit 3 or to be printed in the printer 4.

The RAM 300 includes a text memory 330 to store therein character codes and control codes including LF (line format) information, inputted through the keyboard 2. The LF information comprises a left margin, a right margin, a hot zone and so sorth. The RAM 300 further includes a format memory 310 consisting of a first area 311 and a second area 312 to temporarily store the LF information. Also included in the RAM 300 is a cursor position memory 320 consisting of a first area 321 and a second area 322 to temporarily store the cursor position at the time when such keys as the page key 2A and the block key 2P are depressed.

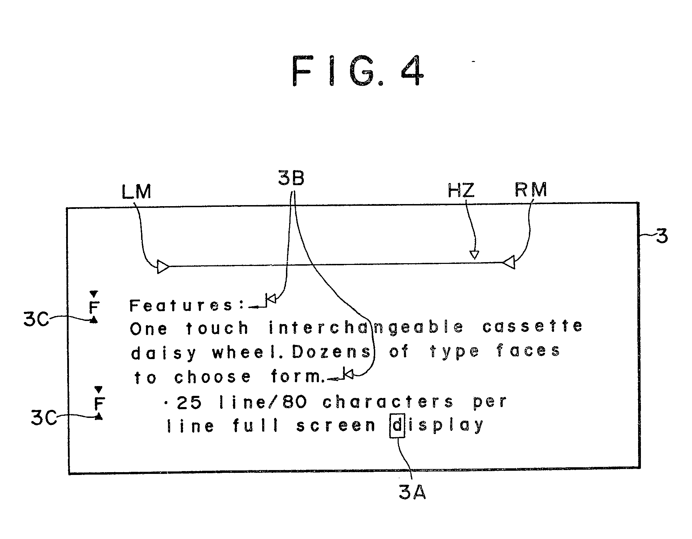

Fig. 4 shows an explanatory illustration of a display example to appear on the display unit 3. A cursor 3A is displayed to indicate a position to receive the next data input. A line feed mark 3B divides the inputted character data into aggregates while moving a carriage, not shown, on the printer unit 4 for line feeding while the printing operation is executed. LF setting mark 3C is placed at the beginning of the first line of the aggregate when LF information is set for the corresponding aggregate divided by the line feed marks 3B.

In a word processor configured as described above, format setting processing takes place as indicated on the flow chart in Figs. 5A through 5C.

In Step S1, key scanning is executed for detecting which key on the keyboard 2 has been depressed. If a key other than the page key 2A has been depressed, corresponding processing is carried out and the program returns to Step S1 (Steps S2 and S3). If, on the other hand, the page key 2A is found to be depressed, the LF information of the aggregate wherein the cursor 3A is currently placed is read out from the text memory 330 and saved in the first area 311 of the format memory 310 (Step S4). Further, the current cursor position is saved in the first area 321 of the cursor position memory 320 (Step S5).

Key scanning is then again executed in Step S6. In case one of the format keys, such as the left margin key 2B, the tab set key 2D, the line space key 2M or the pitch key 2N and so on, has been depressed to set LF information, the set LF information is saved in the second area 312 of the format memory 310 (Steps S7 and S8). By repeating these steps, the set LF information are all saved in the second area 312 of the format memory 310.

In case one of the cursor move keys 2G, 2H, 2I, or 2J has been depressed (Step S9), the cursor 3A is moved by one pitch in the direction indicated on the depressed key on the display unit 3 (Step S10). By repeatedly depressing the keys, the cursor 3A is moved to a desired position on the display unit 3.

In case the block key 2P has been depressed, the LF information is moved to or copied for another aggregate in Step S12. Specifically, as illustrated in Fig. 5C, it is first descriminated in Step S13 whether the cursor 3A is currently placed on the LF setting mark 3C or not. If the cursor 3A is not placed on the line format setting mark 3C, processing goes back to Step S6. This means, the move or copy operation is not executed if the cursor 3A is not placed on the LF setting mark 3C when the block key 2P is depressed. In case the cursor 3A is placed on the mark 3C, the current cursor position is saved in the second area 322 of the cursor position memory 320 and the LF information for the line specified by the current cursor position is saved in the second area 312 of the format memory 310 (Step S14). Then, key scanning is again carried out for detecting which key on the keyboard 2 has been depressed (Step S15).

In case one of cursor move keys 2G, 2H, 2I, or 2J has been depressed (Step S16), the cursor 3A displayed in the display unit 3 is moved by one unit in the direction determined by the depressed key, then processing goes back to Step S15 (Key Scanning).

In case the move key 2Q has been depressed (Step S18), the LF information for the line specified by the cursor position which is saved in the second area 322 of the cursor position memory 320 is cancelled (Step S19), then processing goes forward to Step S21 where the current cursor position is saved in the first area 321 of the cursor position memory 320.

In case, the copy key 2R has been depressed (Step S20), processing directly goes to Step S21. That is, the current cursor position is saved in the first area 321 of the cursor position memory 320 and processing goes back to Step S6.

Thereafter, in case the page key 2A has been again depressed (Step S22 : Fig. 5B), the LF information saved in the second area 312 of the format memory 310 is registered in the text memory 330 within the RAM 300 as LF information for the line specified by the cursor position saved in the first area 321 of the cursor position memory 320. Successively, in Step S24, the reforming operation for the aggregate defined by the line feed mark 3B is carried out from its beginning in accordance with the format registered in the text memory 330. Further, the line format setting mark 3C is displayed at the beginning of the reformed aggregate on the display unit 3 (Step S25), then processing returns to Step S1.

In the meantime, in case the escape key 2S has been depressed (Step S26), the LF information saved in the second area 312 of the format memory 310 is cancelled, and in the successive Step S28, the LF information saved in the first area 311 of the format memory 310 is registered in the text memory 330 as line format for the line specified by the cursor position saved in the first area 321 of the cursor position memory 320, then processing returns to S1.

This means that by depressing the escape key 2S, the LF information which is newly set or changed from the prior one is cancelled and the prior one is again registered as it is in the text memory 320.

With the above described word processors, when the LF information is to be newly set and/or updated, the page key 2A is first to be depressed (Step S2) while the cursor 3A is positioned on the line, the LF information of which is to be newly set and/or updated. Then, by operating the cursor move keys and the format set keys (Steps S7 and S9), the desired LF information is set and saved in the second area 312 of the format memory 310 (Step S8). After completing the format set operations, the page key 2A is again to be depressed (Step S22).

With this key operation, the newly set and/or updated LF information, which has been saved in the second area 312 of the format memory 310, is registered in the text memory 330 as the LF information for the aggregate, to which the cursor position saved in the first area 321 of the cursor position memory 320 belongs (Step S23). Further, the subject aggregate is reformed by the newly registered LF information (Step S25) and the LF setting mark 3C is displayed at the beginning of the first line of the corresponding aggregate (Step S25).

An example of LF information setting operation is now described with reference to Fig. 4. First, the cursor 3A is moved by operating the cursor move keys 2G, 2H, 2I and 2J to a desired position of the aggregate for which LF information is to be set. Pressing the page key 2A then makes LF information setting ready. For example, the left margin LM is now to be changed, the cursor 3A is moved to the top of the display unit 3 by means of the cursor move key 2I, then to a desired left margin setting position by means of the cursor move key 2G or 2H. By pressing the left margin key 2B in this position, the left margin mark LM appears on the display unit 3. This completes the left margin setting operations. Pressing the page key 2A again, the set left margin is registered in the text memory 330 in the RAM 300 as LF information for the aggregate for which the page key 2A has been first pressed, so that the LF setting mark 3C is displayed at the beginning of the first line of the corresponding aggregate.

In the meantime, when the LF information of one aggregate is to be copied as that of other aggregate, after once the page key 2A is depressed while the cursor 3A is positioned on the LF setting mark 3C of the above one aggregate, the LF information of which is to be copied, the block key 2P is to be depressed (Step S11) while the cursor 3A is positioned on the line, to which the LF information of the former one is adapted. With depressing the block key 2P, the processing goes to the move or copy operation (Step S12).

In the move or copy operation illustrated in Fig. 5C, by depressing the copy key 2R, the LF information of one aggregate is copied as that of other aggregate while remaining unchanged the LF information of the above one aggeregate. On the contrary, in case the move key 2Q is depressed, the LF information of one aggregate is copied as that of the other aggregate samely as the case the copy key 2R is depressed, but the LF information of the above one aggregate is cancelled.

With the above described word processor embodying the invention, it becomes able not only to set or update the print format but also to adapt the print format set for one aggregate to other desired aggregates to reform them. Whether the format adapted to other aggregate should remain to be valid for the original aggregate or to be made invalid can be determined by selecting either move key 2Q or copy key 2R.

**Claims**

1. A word processor comprising a keyboard for inputting character codes and function codes, a display means for displaying character data corresponding to the inputted character codes, and control means for organizing aggregates, each of which comprises a group of character data, said word processor including: format setting means for setting a print format for at least one aggregate; and format control means for reforming another of said aggregates by employing the print format which has been set for one of said aggregates.

2. The word processor according to claim 1 which further comprises; first designating means for designating said one aggregate, the print format of which is to be employed to said another aggregate; memory means for storing the print format of the aggregate designated by said first designating means; and second designating means for designating said another aggregate, to which the print format for said one aggregate is to be employed; and wherein said format control means reforms said another aggregate based upon the print format stored in said memory means.

3. The word processor according to claim 2 wherein each of said first and second designating means employs indicating means for indicating a position on said display means at which next character data is to be inputted.

4. The word processor according to claim 3 wherein said memory means comprises two memory areas, one of which is for storing the print format of said one aggregate designated by said first designating means while the other one for said another aggregate designated by said second designating means; and which further comprises second memory means for storing the position indicated by said indicating means, said second memory means comprising two memory areas, one of which is for the position indicated by said indicating means at the time when said first designating means is operated while the other of which is for the position indicated by said indicating means at the time when said second designating means is operated, whereby the selected one of the print formats respectively stored in said two memory areas of said memory means may be adapted to the aggregate to which the selected one of the positions respectively stored in said two memory areas of said second memory means belongs.

5. The word processor according to claim 2, 3 or 4 wherein said format control means includes cancel means for cancelling the print format for said one aggregate designated by said first designating means at the time when the print format is adapted to said another aggregate designated by said second designating means.

# FIG.1

# FIG.2

# FIG. 3

KEY BOARD 2

ROM 200

CG ROM 210

CPU 10

DISPLAY UNIT 3

PRINTER UNIT 4

RAM 300

TEXT MEMORY 330

FORMAT MEMORY 310

1ST AREA 311

2ND AREA 312

CURSOR POSITION MEMORY 320

1ST AREA 321

2ND AREA 322

# FIG. 4

LM  3B  HZ  RM

3

▼
F
▲
3C

Features:
One touch interchangeable cassette
daisy wheel. Dozens of type faces
to choose form.

▼
F
▲
3C

·25 line/80 characters per
line full screen display

3A

# FIG. 5A

START

S1 — KEY SCANNING

S2 — PAGE KEY ?  — N → S3 PROCESSING FOR OTHER KEYS → RET

Y

S4 — SAVE "LF" INFORMATION SPECIFIED BY CURSOR POSITION IN 1ST AREA OF FORMAT MEMORY

S5 — SAVE CURSOR POSITION TO 1ST AREA OF CURSOR POSITION MEMORY

(A)

S6 — KEY SCANNING

S7 — ONE OF FORMAT SET KEYS ? — Y → S8 SAVE "LF" INFORMATION IN 2ND AREA OF FORMAT MEMORY

N

S9 — ONE OF CURSOR MOVE KEYS ? — Y → S10 CURSOR MOVEMENT

N

S11 — BLOCK KEY ? — Y → S12 MOVE OR COPY OPERATION

N

(B)

# FIG.5B

(B)

S22

PAGE KEY ? — Y → S23

**S23** REGISTER "LF" INFORMATION SAVED IN 2ND AREA OF FORMAT MEMORY, AS "LF" FOR LINE SPECIFIED BY CURSOR POSITION SAVED IN 1ST AREA OF CURSOR POSITION MEMORY

**S24** REFORM WITH REGISTERED FORMAT

**S25** DISPLAY "LF" SETTING MARK AT BEGINNING OF LINE

( RET )

N

S26

ESCAPE KEY ? — Y → S27

**S27** CANCEL "LF" INFORMATION SAVED IN 2ND AREA OF FORMAT MEMORY

N

(A)

**S28** REGISTER "LF" INFORMATION SAVED IN 1ST AREA OF FORMAT MEMORY, AS "LF" FOR LINE SPECIFIED BY CURSOR POSITION SAVED IN 1ST AREA OF CURSOR POSITION MEMORY

( RET )

# FIG. 5C

```
┌─────────────────────────┐
│ MOVE OR COPY            │
│ OPERATION              │
└─────────────────────────┘
            │
     S13    ▼
    ╱ CURSOR ╲      N
   ╱ ON "LF" SETTING ╲─────────( A )
   ╲  MARK ?  ╱
     ╲    ╱
       │ Y
  S14  ▼
┌─────────────────────────────────────┐
│ SAVE CURSOR POSITION IN 2ND         │
│ AREA OF CURSOR POSITION MEMORY,     │
│ AND "LF" INFORMATION SPECIFIED      │
│ BY CURSOR POSITION SAVED IN 2ND     │
│ AREA OF FORMAT MEMORY               │
└─────────────────────────────────────┘
            │
  S15       ▼
┌─────────────────────────┐
│   KEY SCANNING          │
└─────────────────────────┘
            │
  S16       ▼                    S17
    ╱ ONE OF CURSOR ╲   Y     ┌──────────────────────┐
   ╱   MOVE KEYS     ╲────────│ CURSOR MOVEMENT      │────▶
   ╲      ?         ╱         └──────────────────────┘
     ╲    ╱
       │ N                     S19
  S18  ▼                  ┌──────────────────────────────┐
    ╱ MOVE KEY ? ╲    Y   │ CANCEL "LF" INFORMATION      │
   ╲           ╱─────────│ SPECIFIED BY CURSOR          │
     ╲       ╱            │ POSITION SAVED IN 2ND AREA   │
       │ N                │ OF CURSOR POSITION           │
  S20  ▼                  │ MEMORY                       │
    ╱ COPY KEY ? ╲   Y    └──────────────────────────────┘
   ╲           ╱──────────────▶
     ╲       ╱                      S21
       │ N                    ┌──────────────────────────┐
                              │ SAVE CURSOR POSITION     │
                              │ IN 1ST AREA OF CURSOR    │
                              │ POSITION MEMORY          │
                              └──────────────────────────┘
                                        │
                                      ( A )
```